(19) **Europäisches Patentamt European Patent Office Office européen des brevets**

(11) **EP 4 612 032 B1**

(12) **FASCICULE DE BREVET EUROPEEN**

(45) Date de publication et mention de la délivrance du brevet:
**10.06.2026 Bulletin 2026/24**

(21) Numéro de dépôt: **23793927.7**

(22) Date de dépôt: **06.10.2023**

(51) Classification Internationale des Brevets (IPC):
**B60W 50/14** (2020.01)    **G08G 1/052** (2006.01)
**B60W 30/08** (2012.01)    **B60W 30/095** (2012.01)
**B60W 30/14** (2006.01)    **B60W 30/18** (2012.01)
**G08G 1/16** (2006.01)

(52) Classification Coopérative des Brevets (CPC):
**B60W 30/14; B60W 30/08; B60W 30/095; B60W 30/0953; B60W 30/0956; B60W 30/18163; B60W 50/14; G08G 1/052; G08G 1/167;** B60W 2050/143; B60W 2520/10; B60W 2540/20; B60W 2554/801

(86) Numéro de dépôt international:
**PCT/FR2023/051564**

(87) Numéro de publication internationale:
**WO 2024/094941 (10.05.2024 Gazette 2024/19)**

(54) **PROCÉDÉ ET DISPOSITIF DE CONTRÔLE DE GESTION DES MESSAGES D'ALERTES POUR UN SYSTÈME DE RÉGULATION ADAPTATIVE DE VITESSE D'UN VÉHICULE**

VERFAHREN UND VORRICHTUNG ZUR VERWALTUNG VON WARNMELDUNGEN FÜR EIN ADAPTIVES GESCHWINDIGKEITSREGELSYSTEM EINES FAHRZEUGS

METHOD AND DEVICE FOR MANAGING ALERT MESSAGES FOR AN ADAPTIVE CRUISE CONTROL SYSTEM OF A VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **02.11.2022 FR 2211397**

(43) Date de publication de la demande:
**10.09.2025 Bulletin 2025/37**

(73) Titulaire: **Stellantis Auto SAS 78300 Poissy (FR)**

(72) Inventeur: **VIVET, Luc 75016 PARIS 16 (FR)**

(74) Mandataire: **ESIP Stellantis Auto SAS Service REIP - YT800 43, rue Jean Pierre Timbaud 78300 Poissy (FR)**

(56) Documents cités:
WO-A2-2020/035728    DE-A1- 102016 223 943
US-A1- 2017 080 952    US-A1- 2018 061 240

## Description

### Domaine technique

La présente invention revendique la priorité de la demande française 2211397 déposée le 02.11.2022. La présente invention concerne les procédés et dispositifs de contrôle d'un système de régulation adaptative de vitesse d'un véhicule, notamment un véhicule automobile. La présente invention concerne également un procédé et un dispositif de régulation de vitesse d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Un système ADAS connu est décrit dans DE 10 2016 223943 A1.

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, dans certaines situations de vie du véhicule, par exemple lorsqu'un véhicule roulant sous le contrôle d'un système ACC souhaite changer de voie de circulation, le système ACC peut s'avérer limitant pour le conducteur en affichant des messages d'alerte, par exemple pour demander au conducteur de reprendre le contrôle de la vitesse du véhicule jusqu'alors contrôlée par le système ACC, alors que la situation ne l'exige pas véritablement. Le compromis entre une certaine souplesse dans le contrôle de la vitesse par le système ACC et la sécurité des passagers est parfois difficile à trouver.

### Résumé de la présente invention

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, la présente invention concerne un procédé de contrôle d'un système de régulation adaptative de vitesse, dit système ACC, d'un premier véhicule, le premier véhicule circulant sur une première voie de circulation d'une portion de route comprenant en outre une deuxième voie de circulation adjacente à la première voie de circulation, le procédé comprenant les étapes suivantes :

- détection d'un déclenchement d'au moins un clignotant du premier véhicule, le déclenchement étant représentatif d'une indication de changement de voie de circulation depuis la première voie de circulation vers la deuxième voie de circulation ;
- détection d'un deuxième véhicule circulant sur la deuxième voie de circulation devant le premier véhicule ;
- détermination d'une distance latérale entre le premier véhicule et le deuxième véhicule selon un axe transversal d'un repère associé au premier véhicule ;
- comparaison de la distance latérale avec une valeur limite représentative d'une limite de distance latérale vis-à-vis du premier véhicule, la valeur limite étant déterminée en fonction d'une constante déterminée, d'une valeur d'accélération latérale maximale déterminée du premier véhicule, d'une vitesse longitudinale du premier véhicule et d'une valeur représentative d'une position longitudinale le long d'un axe longitudinal du repère ;
- contrôle du système ACC en fonction d'un résultat de la comparaison.

La détection du déclenchement d'un clignotant permet de détecter une intention du conducteur du premier véhicule de changer de voie pour passer de la première voie de circulation à la deuxième voie de circulation. La comparaison entre la distance latérale séparant le premier véhicule du deuxième véhicule avec une valeur limite déterminée en fonction de paramètres cinématiques du premier véhicule permet de déterminer si le deuxième véhicule représente un danger ou non pour le premier véhicule en déterminant s'il est suffisamment éloigné par exemple. Cela permet de déterminer si un message d'alerte doit être rendu dans le cadre du contrôle de la vitesse du premier véhicule par le système ACC. Un tel contrôle permet d'améliorer le fonctionnement du système ACC en ne rendant les messages d'alerte que lorsque la sécurité du premier véhicule le requiert vraiment.

Selon une variante, la valeur limite est notée $Y_{lim}$ et est obtenue selon l'équation suivante : $Y_{lim} = Y0 + (A_{LatMax} / 2) * (x^2 / V_x^2)$, avec Y0 correspondant à la constante déterminée, $A_{LatMax}$ correspondant à la valeur d'accélération latérale maximale déterminée, x correspondant à la valeur représentative d'une position longitudinale et $V_x$ correspondant à la vitesse longitudinale du premier véhicule.

Selon une autre variante, la constante déterminée est égale à 2 m et la valeur d'accélération latérale maximale déterminée est égale à 3 m.s⁻². 



Selon une autre variante, la constante déterminée est égale à 2 m et la valeur d'accélération latérale maximale déterminée est égale à $3\ \mathrm{m.s^{-2}}$.

Selon une variante supplémentaire, lorsque la distance latérale entre le premier véhicule et le deuxième véhicule est supérieure à la valeur limite alors le système ACC est contrôlé en fonction du deuxième véhicule sans rendu de message d'alerte à destination d'un conducteur du premier véhicule.

Selon encore une variante, lorsque la distance latérale entre le premier véhicule et le deuxième véhicule est inférieure ou égale à la valeur limite alors le système ACC est contrôlé en fonction du deuxième véhicule avec rendu de message d'alerte à destination d'un conducteur du premier véhicule.

Selon une variante additionnelle, le message d'alerte est représentatif d'une requête pour que le conducteur prenne le contrôle de la vitesse du premier véhicule.

Selon une autre variante, le procédé comprend en outre une étape de détermination d'une portion de la deuxième voie de circulation en fonction de la valeur limite, la portion correspondant à une partie de la deuxième voie de circulation limitée d'un premier côté correspondant au côté du premier véhicule par la valeur limite et d'un deuxième côté opposé au premier côté correspondant à un bord latéral de la deuxième voie de circulation,
le système ACC étant contrôlé en fonction d'une présence ou d'une absence du deuxième véhicule dans la portion de la deuxième voie de circulation.

Selon un deuxième aspect, la présente invention concerne un dispositif de contrôle d'un système de régulation adaptative de vitesse de véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :

[Fig. 1] illustre schématiquement un premier véhicule circulant sur une première voie de circulation d'une portion de route à plusieurs voies de circulation, selon un exemple de réalisation particulier et non limitatif de la présente invention ;

[Fig. 2] illustre schématiquement un profil d'une limite d'une portion d'une deuxième voie de circulation de la portion de route de la figure 1, selon un exemple de réalisation particulier et non limitatif de la présente invention ;

[Fig. 3] illustre schématiquement un dispositif configuré pour contrôler un système de régulation adaptative de vitesse du premier véhicule de la figure 1, selon un exemple de réalisation particulier et non limitatif de la présente invention ;

[Fig. 4] illustre un organigramme des différentes étapes d'un procédé de contrôle d'un système de régulation adaptative de vitesse du premier véhicule de la figure 1, selon un exemple de réalisation particulier et non limitatif de la présente invention.

## Description des exemples de réalisation

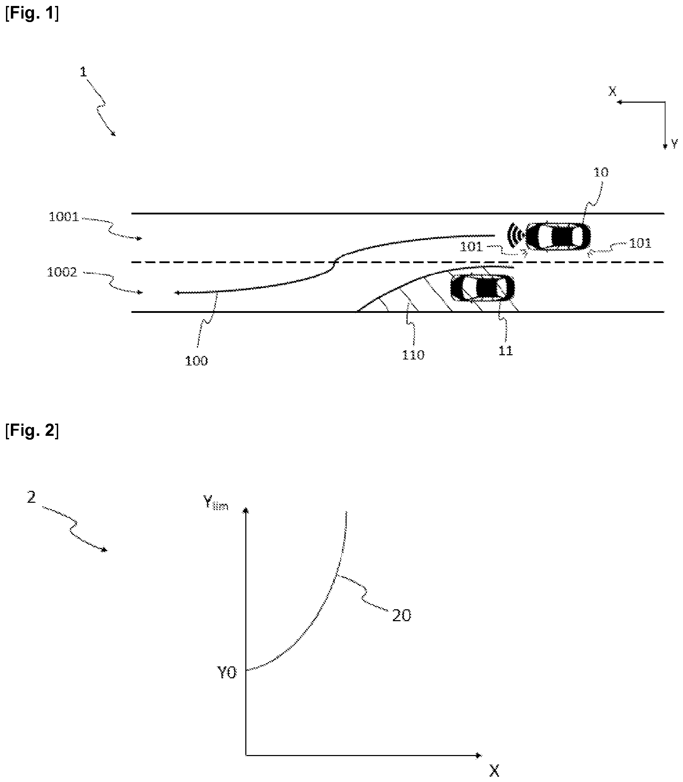

Un procédé et un dispositif de contrôle d'un système de régulation adaptative de vitesse d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, le contrôle d'un système de régulation adaptative de vitesse, dit système ACC, d'un premier véhicule circulant sur une première voie de circulation d'une portion de route à plusieurs voies de circulation selon un même sens de circulation comprend la détection du déclenchement d'un ou plusieurs clignotants du premier véhicule. Suivant cette détection, le premier véhicule détermine la distance qui le sépare latéralement d'un deuxième véhicule détecté sur une deuxième voie de circulation de la portion de route, laquelle deuxième voie est adjacente à la première voie de circulation, par exemple à partir de données obtenues d'un ou plusieurs radars du premier véhicule. Cette distance latérale (selon un axe transversal Y d'un repère (X,Y) associé au premier véhicule) est comparée à une distance latérale limite (par rapport au premier véhicule) qui délimite une portion de la deuxième voie de circulation, cette distance latérale limite étant déterminée en fonction d'une constante déterminée, d'une valeur d'accélération latérale maximale déterminée du premier véhicule, d'une vitesse longitudinale du premier véhicule et d'une valeur représentative d'une position longitudinale le long d'un axe longitudinal du repère (X,Y) associé au premier véhicule. Enfin, le système ACC est contrôlé en fonction du résultat de la comparaison, par exemple en affichant ou pas un message d'alerte à destination du conducteur du premier véhicule pour que ce dernier reprenne le contrôle de la vitesse du premier véhicule.

La détection de l'actionnement des clignotants du premier véhicule permet de prendre en considération une intention de changement de voie de circulation dans le contrôle du système ACC. La détermination d'une portion de la deuxième route délimitée en fonction de paramètres cinématiques du premier véhicule permet de déterminer, en fonction de la présence d'un deuxième véhicule dans cette portion, pour générer ou non un message d'alerte.

La figure 1 illustre schématiquement un premier véhicule 10 circulant sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, dite première voie de circulation, les deux voies de circulation 1001 et 1002 étant adjacentes selon un même sens de circulation. La première voie de circulation 1001 correspond par exemple à la voie de circulation considérée comme étant la plus lente et la voie de circulation de gauche 1002, dite deuxième voie de circulation, correspond à la voie de circulation considérée comme étant la plus rapide.

Les notions de droite et de gauche sont définies selon le sens de circulation du premier véhicule 10. La voie de circulation « la plus lente » est à droite dans les pays où les véhicules circulent sur la voie de droite (pays tels que la France par exemple). La voie de circulation « la plus lente » est à gauche dans les pays où les véhicules circulent sur la voie de gauche (pays tels que le Royaume-Uni par exemple).

Selon l'exemple de la figure 1, un deuxième véhicule 11 circule sur la deuxième voie de circulation 1002, devant le premier véhicule 10 et dans la même direction que le premier véhicule 10. Le deuxième véhicule 11 circule à une distance déterminée du premier véhicule 10, laquelle distance peut varier dans le temps (en fonction du comportement dynamique du premier véhicule 10 et du deuxième véhicule 11).

Le premier véhicule 10 embarque par exemple un ou plusieurs des capteurs suivants :

- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou

- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou

- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Selon un exemple de réalisation, le premier véhicule 10 embarque un système ADAS correspondant à un système de régulation automatique de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation. Les données obtenues du ou des capteurs embarqués dans le premier véhicule 10 permettent au système ACC du premier véhicule 10 d'établir une valeur cible d'accélération $A_{cible}(t)$ au cours du temps 't'. L'accélération cible $A_{cible}(t)$ devient une consigne d'accélération $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du premier véhicule 10, notamment pour que ce(s) dernier(s) détermine(nt) les consignes de couple à générer par le groupe motopropulseur pour respecter les consignes d'accélération $A_{consigne}(t)$ et réguler la vitesse du premier véhicule 10.

Une valeur d'accélération cible est par exemple déterminée à un instant courant t à partir d'un ensemble de données obtenues d'un ou plusieurs capteurs de détection d'objet embarqués dans le premier véhicule 10 et/ou de paramètres de consigne entrés par exemple par le conducteur ou déterminés à partir de données sur l'environnement du premier véhicule 10. La valeur d'accélération cible (exprimée en m.s$^{-2}$) est par exemple calculée à partir de paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Un processus de contrôle du système ACC du premier véhicule 10 est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC.

Dans une première opération, le déclenchement d'un ou plusieurs clignotants latéraux, par exemple les clignotants gauches 101 du premier véhicule 10, est détecté ou une information représentative du déclenchement des clignotants est reçue par le calculateur en charge du processus.

Un feu clignotant (aussi appelé clignotant) correspond avantageusement à un éclairage utilisé pour indiquer ou signaler un changement de direction (par exemple vers la droite (respectivement vers la gauche) lorsque le ou les feux clignotants droit (respectivement gauche) sont activés).

L'éclairage d'un feu clignotant est généralement de couleur orange et un feu clignotant, lorsqu'il est activé, émet de la lumière de manière discontinue. La fréquence des clignotements est par exemple comprise entre 60 et 120 clignotements par minute, par exemple 90 clignotements par minute.

Le déclenchement des clignotants gauches 101 du premier véhicule 10 est ainsi représentatif d'une intention du premier véhicule 10 (par exemple de son conducteur) de changer de voie de circulation pour passer sur la deuxième voie de circulation 1002 située à gauche de la première voie de circulation 1001 du premier véhicule 10, laquelle première voie 1001 correspond à la voie de circulation courante du premier véhicule 10 à un instant courant, lequel instant courant correspond par exemple à l'instant auquel l'activation des clignotants 101 est détectée.

Les feux clignotants du premier véhicule 10 sont avantageusement contrôlés par un ou plusieurs calculateurs du système embarqué du premier véhicule 10. Le système embarqué du premier véhicule 10 comprend un ensemble de calculateurs reliés entre eux par un ou plusieurs bus de communication. Ces calculateurs forment par exemple une architecture multiplexée pour la réalisation de différents services utiles pour le bon fonctionnement du premier véhicule 10 et pour assister le conducteur et/ou les passagers du véhicule dans le contrôle du premier véhicule 10, par exemple en contrôlant le système ACC et/ou l'activation et la désactivations de chacun des feux clignotants du véhicule en fonction de signaux de commande reçus d'organes de commande arrangés par exemple dans l'habitacle du premier véhicule 10, ces signaux de commande circulant sur l'architecture multiplexée. Les calculateurs échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

La détection de l'activation des clignotants 1001 est ainsi par exemple obtenue par la réception d'une information filaire de type binaire acquise par le calculateur ou le boitier de servitude intelligent, dit BSI, du premier véhicule 10 lorsque cette information est transmise sur le réseau filaire, par exemple le bus de données, du système embarqué du premier véhicule 10. Une telle information correspond à une valeur binaire prenant une première valeur lorsque les clignotants sont actifs ou activés et une deuxième valeur lorsque les clignotants sont inactifs ou désactivés. Une telle information est par exemple transmise par le BSI au calculateur en charge du processus via le bus de données reliant ces deux calculateurs.

Dans une deuxième opération, un deuxième véhicule 11 circulant devant le premier véhicule 10 sur la deuxième voie de circulation 1002 est détecté à partir des données obtenues d'un ou plusieurs des capteurs embarqués dans le premier véhicule 10, par exemple par un ou plusieurs radars.

Dans une troisième opération, la distance latérale (ou un ensemble de distances latérales), exprimée en mètres (m) et notée $'D_{lat}'$, séparant le premier véhicule 10 du deuxième véhicule 11 selon un axe transversal Y d'un repère orthonormé (X,Y) associé au véhicule, X représentant l'axe longitudinal du premier véhicule 10 et Y l'axe transversal orthogonal à l'axe longitudinal X est déterminée ou calculée, par exemple à partir des données de détection du deuxième véhicule 11, par exemple les données obtenues de radar(s). La distance latérale correspond à la distance entre un point de référence du premier véhicule 10 (par exemple le milieu de l'essieu avant ou un point représentant le coin avant gauche du premier véhicule 10) et le point de l'enveloppe externe du deuxième véhicule 10 (détectée par le ou les radars) le plus proche du premier véhicule 10, selon l'axe Y.

Selon un autre exemple, la distance latérale correspond à un ensemble de distances latérales entre le point de référence du premier véhicule 10 et un ensemble de points représentant l'enveloppe externe du deuxième véhicule 11.

Dans une quatrième opération, une valeur latérale limite représentative d'une limite (notée $'Y_{lim}'$)de distance latérale vis-à-vis du premier véhicule 10 est calculée ou déterminée comme une fonction d'une constante déterminée (notée Y0), d'une valeur d'accélération latérale maximale déterminée (notée $'A_{LatMax}'$) du premier véhicule 10, d'une vitesse longitudinale (notée $'V_x'$) du premier véhicule 10 le long de l'axe X et d'une valeur représentative d'une position longitudinale (notée 'x') le long de l'axe longitudinal X du repère (X,Y).

Cette fonction représente les variations de $Y_{lim}$ (représentée selon l'axe Y du repère (X,Y)) en fonction de la position x (représentée selon l'axe X du repère (X,Y)) et est par exemple obtenue via l'équation suivante :

[Math 1]

$$Y_{lim} = Y0 + \frac{A_{LatMax}}{2} * \frac{x^2}{V_x^2}$$

Bien entendu, la représentation de $Y_{lim}$ en fonction de x n'est pas limitée à l'équation ci-dessus mais s'étend à d'autres équations, par exemple :

[Math 2]

$$Y_{lim} = Y0 + A_{LatMax} * \frac{x^2}{V_x^2}$$

Y0 correspond par exemple à la largeur moyenne d'un véhicule automobile et est par exemple égale à 2 m. Selon d'autres exemples Y0 vaut 1.5, 2.5 ou 3 m.

$A_{LatMax}$ vaut par exemple 3 m.s$^{-2}$. Selon d'autres exemples, $A_{LatMax}$ vaut 2, 2.5, 3.5 ou 4 m.s$^{-2}$.

La figure 2 illustre un diagramme 2 représentant un exemple d'un profil de variation de $Y_{lim}$ (en ordonnée du diagramme 2) en fonction de x (en abscisse du diagramme 2).

x représente par exemple la position, selon l'axe longitudinal X, du premier véhicule 10 le long de la trajectoire 100.

Une telle limite $Y_{lim}$ permet de déterminer ou représenter une zone 110 correspondant à une portion de la deuxième voie de circulation, illustrée en traits hachurés sur la figure 1, la limite étant représentée par une courbe avec un premier point à une distance latérale déterminée du premier véhicule 10, les points de la courbe s'éloignant latéralement du premier véhicule 10 au fur et à mesure que x augmente jusqu'à ce que la courbe intersecte un deuxième bord (ou côté) latéral de la deuxième voie de circulation 1002, représenté par un trait continu (lequel deuxième bord est parallèle et opposé au premier bord (ou côté) de la deuxième voie de circulation, lequel premier bord correspond à la limite (représentée par une ligne à traits pointillés) séparant la première voie de circulation 1001 de la deuxième voie de circulation 1002).

La limite $Y_{lim}$ et la portion 110 associée évoluent au fur et à mesure du déplacement du premier véhicule 10 le long de la trajectoire 100.

Dans une cinquième opération, la distance latérale $D_{lat}$ entre le premier véhicule 10 et le deuxième véhicule 11, obtenue à la troisième opération, est comparée à la valeur limite Ylim selon la position x associée à cette distance latérale $D_{lat}$.

De manière équivalente et alternative à la comparaison ci-dessus, la position du deuxième véhicule 11 est comparée à la portion 110 pour déterminer si le deuxième véhicule est positionné à l'intérieure de la portion 110 ou au moins en partie à l'extérieur de cette portion 110

Dans une sixième opération, le système ACC du premier véhicule 10 est contrôlé en fonction du résultat de la comparaison de la cinquième opération, ou en fonction de la présence du deuxième véhicule 11 dans la portion 110 (ou de la présence d'une partie du deuxième véhicule 11 hors de cette portion 110).

Le deuxième véhicule 11 est avantageusement sélectionné comme véhicule cible du système ACC et le système ACC est contrôlé en fonction du deuxième véhicule 11, par exemple en fonction d'un temps inter-véhicules (noté TIV) entre les deux véhicules et en fonction d'un TIV de consigne du système ACC.

Le système ACC est en outre contrôlé de manière à rendre (par exemple par affichage sur un écran et/ou par rendu par synthèse vocale via un ou plusieurs haut-parleurs) un ou plusieurs messages d'alerte à destination du conducteur du premier véhicule 10 pour demander au conducteur de reprendre le contrôle du premier véhicule 10, notamment de la vitesse du premier véhicule 10.

Ainsi, lorsque la distance latérale $D_{lat}$ entre le premier véhicule 10 et le deuxième véhicule 11 est supérieure à la valeur limite $Y_{lim}$ ($D_{lat} > Y_{lim}$) alors le système ACC est contrôlé en fonction du deuxième véhicule sans mise en œuvre du rendu de message d'alerte à destination du conducteur du premier véhicule.

Dit autrement, lorsque le deuxième véhicule 11 est détecté comme circulant dans la portion 110 de la deuxième voie de circulation 1002, alors aucun message d'alerte n'est rendu par le système ACC.

Dans ce premier cas de figure, le deuxième véhicule 11 est déterminé comme étant suffisamment éloigné latéralement du premier véhicule 10 et le deuxième véhicule 11 ne représente donc pas de danger immédiat pour le premier véhicule 11. Aucun message d'alerte n'est généré ni rendu par le système ACC à destination du conducteur du premier véhicule 10.

Dans le cas contraire, lorsque la distance latérale $D_{lat}$ entre le premier véhicule 10 et le deuxième véhicule 11 est inférieure ou égale à la valeur limite $Y_{lim}$ ($D_{lat} \leq Y_{lim}$) alors le système ACC est contrôlé en fonction du deuxième véhicule avec mise en œuvre du rendu d'au moins un message d'alerte à destination du conducteur du premier véhicule 10.

Dit autrement, lorsque le deuxième véhicule 11 est détecté comme circulant au moins en partie à l'extérieur de la portion 110 de la deuxième voie de circulation 1002, alors un ou plusieurs messages d'alerte est/sont rendu(s) par le système ACC dans le premier véhicule 10.

Dans ce deuxième cas de figure, le deuxième véhicule 11 est déterminé comme étant trop proche latéralement du premier véhicule 10 et le deuxième véhicule 11 représente un danger potentiel pour le premier véhicule 11. Un ou plusieurs messages d'alertes est/sont généré(s) et rendu(s) par le système ACC à destination du conducteur du premier véhicule 10 pour alerter le conducteur et pour que ce dernier reprenne le contrôle de la vitesse du premier véhicule 10.

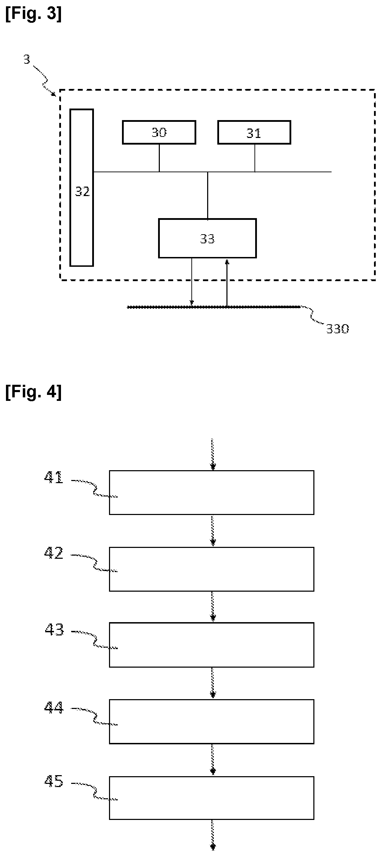

La figure 3 illustre schématiquement un dispositif 3 configuré pour contrôler le système ACC d'un véhicule, par exemple du premier véhicule 10, selon un exemple de réalisation particulier et non limitatif de la présente invention. Le dispositif 3 correspond par exemple à un dispositif embarqué dans le premier véhicule 10, par exemple un calculateur.

Le dispositif 3 est par exemple configuré pour la mise en œuvre des opérations décrites en regard des figures 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ; interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 3.

La figure 4 illustre un organigramme des différentes étapes d'un procédé de contrôle d'un système ACC d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 3 de la figure 3.

Dans une première étape 41, un déclenchement d'au moins un clignotant du premier véhicule est détecté, le déclenchement étant représentatif d'une indication de changement de voie de circulation depuis la première voie de circulation vers la deuxième voie de circulation.

Dans une deuxième étape 42, un deuxième véhicule est détecté circulant sur la deuxième voie de circulation devant le premier véhicule.

Dans une troisième étape 43, une distance latérale entre le premier véhicule et le deuxième véhicule est déterminée selon un axe transversal d'un repère associé au premier véhicule.

Dans une quatrième étape 44, la distance latérale est comparée avec une valeur limite représentative d'une limite de distance latérale vis-à-vis du premier véhicule, la valeur limite étant déterminée en fonction d'une constante déterminée, d'une valeur d'accélération latérale maximale déterminée du premier véhicule, d'une vitesse longitudinale du premier véhicule et d'une valeur représentative d'une position longitudinale le long d'un axe longitudinal du repère.

Dans une cinquième étape 45, le système ACC est contrôlé en fonction d'un résultat de la comparaison.

Selon une variante, les variantes et exemples des opérations décrits en relation avec la figure 1 et/ou 2 s'appliquent aux étapes du procédé de la figure 4.

La présente invention concerne également un système de régulation adaptative de vitesse pour véhicule comprenant le dispositif 3 de la figure 3.

La présente invention concerne également un véhicule, par exemple automobile ou plus généralement un véhicule autonome à moteur terrestre, comprenant le dispositif 3 de la figure 3 ou le système de régulation adaptative de vitesse pour véhicule ci-dessus.

## Revendications

1. Procédé de contrôle d'un système de régulation adaptative de vitesse, dit système ACC, d'un premier véhicule (10), ledit premier véhicule (10) circulant sur une première voie de circulation (1001) d'une portion de route comprenant en outre une deuxième voie de circulation (1002) adjacente à ladite première voie de circulation (1001), ledit procédé comprenant les étapes suivantes :

   - détection (41) d'un déclenchement d'au moins un clignotant (101) dudit premier véhicule (10), ledit déclenchement étant représentatif d'une indication de changement de voie de circulation depuis ladite première voie de circulation (1001) vers ladite deuxième voie de circulation (1002) ;
   - détection (42) d'un deuxième véhicule (11) circulant sur ladite deuxième voie de circulation (1002) devant ledit premier véhicule (10) ;
   - détermination (43) d'une distance latérale entre ledit premier véhicule (10) et ledit deuxième véhicule (11) selon un axe transversal d'un repère associé audit premier véhicule (10) ;
   - comparaison (44) de ladite distance latérale avec une valeur limite représentative d'une limite de distance latérale vis-à-vis dudit premier véhicule (10), ladite valeur limite étant déterminée en fonction d'une constante déterminée, d'une valeur d'accélération latérale maximale déterminée dudit premier véhicule (10), d'une vitesse longitudinale dudit premier véhicule (10) et d'une valeur représentative d'une position longitudinale le long d'un axe longitudinal dudit repère ;
   - contrôle (45) dudit système ACC en fonction d'un résultat de ladite comparaison (44).

2. Procédé selon la revendication 1, pour lequel ladite valeur limite est notée $Y_{lim}$ et est obtenue selon l'équation suivante :

$$Y_{lim} = Y0 + (A_{LatMax} / 2) * (x^2 / V_x^2),$$

avec Y0 correspondant à ladite constante déterminée, $A_{LatMax}$ correspondant à ladite valeur d'accélération latérale maximale déterminée, x correspondant à ladite valeur représentative d'une position longitudinale et $V_x$ correspondant à ladite vitesse longitudinale dudit premier véhicule (10).

3. Procédé selon la revendication 2, pour lequel ladite constante déterminée est égale à 2 m et ladite valeur d'accélération latérale maximale déterminée est égale à 3 $m.s^{-2}$.

4. Procédé selon l'une des revendications 1 à 3, pour lequel, lorsque ladite distance latérale entre ledit premier véhicule (10) et ledit deuxième véhicule (11) est supérieure à ladite valeur limite alors ledit système ACC est contrôlé en fonction dudit deuxième véhicule (11) sans rendu de message d'alerte à destination d'un conducteur dudit premier véhicule (10).

5. Procédé selon l'une des revendications 1 à 4, pour lequel, lorsque ladite distance latérale entre ledit premier véhicule (10) et ledit deuxième véhicule (11) est inférieure ou égale à ladite valeur limite alors ledit système ACC est contrôlé en fonction dudit deuxième véhicule (11) avec rendu de message d'alerte à destination d'un conducteur dudit premier véhicule (10).

6. Procédé selon l'une des revendications 4 et 5, pour lequel ledit message d'alerte est représentatif d'une requête pour que ledit conducteur prenne le contrôle de la vitesse dudit premier véhicule (10).

7. Procédé selon l'une des revendications 1 à 6, comprenant en outre une étape de détermination d'une portion (110) de ladite deuxième voie de circulation (1002) en fonction de ladite valeur limite, ladite portion correspondant à une partie de ladite deuxième voie de circulation limitée d'un premier côté correspondant au côté dudit premier véhicule par ladite valeur limite et d'un deuxième côté opposé audit premier côté correspondant à un bord latéral de ladite deuxième voie de circulation, ledit système ACC étant contrôlé en fonction d'une présence ou d'une absence dudit deuxième véhicule (11) dans ladite portion (110) de ladite deuxième voie de circulation (1002).

8. Programme d'ordinateur comportant des instructions qui, lorsque ces instructions sont exécutées par un processeur, conduisent celui-ci à mettre en œuvre le procédé selon l'une quelconque des revendications précédentes.

9. Dispositif (3) de contrôle d'un système de régulation adaptative de vitesse de véhicule, ledit dispositif (3) comprenant une mémoire (31) associée à au moins un processeur (30) configuré pour la mise en œuvre des étapes du procédé selon l'une quelconque des revendications 1 à 7.

10. Véhicule (10) comprenant le dispositif (3) selon la revendication 9.


**Patentansprüche**

1. Verfahren zum Steuern eines adaptiven Geschwindigkeitsregelungssystems, ACC-System genannt, eines ersten Fahrzeugs (10), wobei das erste Fahrzeug (10) auf einer ersten Fahrspur (1001) eines Straßenabschnitts fährt, das ferner eine zweite Fahrspur (1002) neben der ersten Fahrspur (1001) umfasst, wobei das Verfahren die folgenden Schritte umfasst:

   - Erfassen (41) eines Auslösens mindestens eines Blinkers (101) des ersten Fahrzeugs (10), wobei das Auslösen für eine Fahrspurwechselanzeige von der ersten Fahrspur (1001) zur zweiten Fahrspur (1002);
   - Detektion (42) eines zweiten Fahrzeugs (11), das auf der zweiten Fahrspur (1002) vor dem ersten Fahrzeug (10) fährt;
   - Bestimmung (43) eines seitlichen Abstands zwischen dem ersten Fahrzeug (10) und dem zweiten Fahrzeug (11) entlang einer Querachse einer dem ersten Fahrzeug (10) zugeordneten Markierung;
   - Vergleich (44) des seitlichen Abstands mit einem Grenzwert Repräsentativ für eine seitliche Abstandsgrenze gegenüber dem ersten Fahrzeug (10), wobei der Grenzwert in Abhängigkeit von einer bestimmten Konstanten, einem bestimmten maximalen seitlichen Beschleunigungswert des ersten Fahrzeugs (10), einer Längsgeschwindigkeit des ersten Fahrzeugs (10) und einem Wert, der repräsentativ für eine Längsposition entlang einer Längsachse der Markierung ist, bestimmt wird;
   - Prüfung (45) des ACC-Systems in Abhängigkeit von einem Ergebnis des Vergleichs (44).

2. Verfahren nach Anspruch 1, bei dem der Grenzwert mit $Y_{lim}$ bewertet wird und nach der folgenden Gleichung erhalten wird:
$Y_{lim} = Y0 + (A_{LatMax} / 2) * (x^2 / V_x^2)$, wobei Y0 der bestimmten Konstante entspricht, $A_{LatMax}$ dem bestimmten maximalen seitlichen Beschleunigungswert entspricht, wobei x dem Wert entspricht, der eine Längsposition darstellt, und $V_x$ der Längsgeschwindigkeit des ersten Fahrzeugs (10) entspricht.

3. Verfahren nach Anspruch 2, bei dem die bestimmte Konstante gleich 2 m und der bestimmte maximale seitliche Beschleunigungswert gleich 3 m.s$^{-2}$ ist.

4. Verfahren nach einem der Ansprüche 1 bis 3, bei dem dann, wenn der seitliche Abstand zwischen dem ersten Fahrzeug (10) und dem zweiten Fahrzeug (11) größer als der Grenzwert ist, das ACC-System in Abhängigkeit von dem zweiten Fahrzeug (11) ohne Ausgabe einer Warnmeldung an einen Fahrer des ersten Fahrzeugs (10) gesteuert wird.

5. Verfahren nach einem der Ansprüche 1 bis 4, bei dem dann, wenn der seitliche Abstand zwischen dem ersten Fahrzeug (10) und dem zweiten Fahrzeug (11) kleiner oder gleich dem Grenzwert ist, das ACC-System in Abhängigkeit von dem zweiten Fahrzeug (11) gesteuert wird, wobei eine Warnmeldung an einen Fahrer des ersten Fahrzeugs (10) wiedergegeben wird.

6. Verfahren nach einem der Ansprüche 4 und 5, bei dem die Warnmeldung für eine Anforderung an den Fahrer repräsentativ ist, die Geschwindigkeit des ersten Fahrzeugs (10) zu steuern.

7. Verfahren nach einem der Ansprüche 1 bis 6, ferner mit dem Schritt des Bestimmens eines Abschnitts (110) der zweiten Fahrspur (1002) in Abhängigkeit von dem Grenzwert, wobei der Abschnitt einem Abschnitt der zweiten Fahrspur entspricht, der auf einer ersten Seite, die der Seite des ersten Fahrzeugs entspricht, durch den Grenzwert begrenzt ist, und auf einer zweiten Seite, die der ersten Seite gegenüberliegt, die einer Seitenkante der zweiten Fahrspur entspricht, wobei
das ACC-System in Abhängigkeit von einem Vorhandensein oder einem Fehlen des zweiten Fahrzeugs (11) in dem Abschnitt (110) der zweiten Fahrspur überwacht wird (1002).

8. Computerprogramm mit Befehlen, die, wenn diese Befehle von einem Prozessor ausgeführt werden, diesen veranlassen, das Verfahren nach einem der vorhergehenden Ansprüche auszuführen.

9. Vorrichtung (3) zur Steuerung eines adaptiven Fahrzeuggeschwindigkeitsregelsystems, wobei die Vorrichtung (3) einen Speicher (31) umfasst, der mit mindestens einem Prozessor (30) verbunden ist, der zur Durchführung der Schritte des Verfahrens nach einem der Ansprüche 1 bis 7 konfiguriert ist.

10. Fahrzeug (10) mit der Vorrichtung (3) nach Anspruch 9.

**Claims**

1. Method for controlling an adaptive speed regulation system, called ACC system, of a first vehicle (10), said first vehicle (10) travelling on a first taxiway (1001) of a road portion further comprising a second taxiway (1002) adjacent to said first taxiway (1001), said method comprising the following steps:

   - detection (41) of a triggering of at least one indicator (101) of said first vehicle (10), said triggering being representative of an indication of a change of taxiway from said first taxiway (1001) to said second taxiway (1002);
   - detection (42) of a second vehicle (11) travelling on said second taxiway (1) said first vehicle (10);
   - determining (43) a lateral distance between said first vehicle (10) and said second vehicle (11) along a transverse axis of a reference frame associated with said first vehicle (10);
   - comparing (44) said lateral distance with a boundary value representative of a lateral distance boundary with respect to said first vehicle (10), said boundary value being determined as a function of a determined constant, of a determined maximum lateral acceleration value of said first vehicle (10), of a longitudinal speed of said first vehicle (10) and of a value representative of a longitudinal position along a longitudinal axis of said reference frame;
   - checking (45) said ACC system as a function of a result of said comparison (44).

2. Method according to claim 1, wherein said limit value is denoted $Y_{lim}$ and is obtained according to the equation:
   $Y_{lim} = Y0 + (A_{LatMax} / 2) * (x^2 / V_x^2)$, with Y0 corresponding to said determined constant, $A_{LatMax}$ corresponding to said determined maximum lateral acceleration value, x corresponding to said value representative of a longitudinal position and $V_x$ corresponding to said longitudinal speed of said first vehicle (10).

3. Method according to claim 2, wherein said determined constant is equal to 2 m and said determined maximum lateral acceleration value is equal to 3 m.s$^{-2}$.

4. Method according to one of claims 1 to 3 for which, when said lateral distance between said first vehicle (10) and said second vehicle (11) is greater than said threshold value, then said ACC system is on dock as a function of said second vehicle (11) without rendering a warning message to a driver of said first vehicle (10).

5. Method according to one of claims 1 to 4, for which, when said lateral distance between said first vehicle (10) and said second vehicle (11) is less than or equal to said limit value, then said ACC system is on dock as a function of said second vehicle (11) with warning message rendering intended for a driver of said first vehicle (10).

6. Method according to one of claims 4 and 5, for which said warning message is representative of a request for said driver to take control of the speed of said first vehicle (10).

7. Method according to one of claims 1 to 6, further comprising a step of determining a portion (110) of said second taxiway (1002) as a function of said boundary value, said portion corresponding to a part of said second taxiway bounded by a first side corresponding to the side of said first side by said boundary value and by a second side opposite said first vehicle corresponding to a lateral edge of said second taxiway,
   said ACC system being on dock as a function of the presence or absence of said second (11) in said portion (110) of said second taxiway (1002).

8. Computer plan comprising instructions which, when these instructions are executed by a processor, lead the latter to implement the method according to any one of the previous claims.

9. Device (3) for controlling an adaptive vehicle speed regulation system, said device (3) comprising a memory (31) associated with at least one processor (30) configured for implementing the steps of the method according to any one of claims 1 to 7.

10. Vehicle (10) comprising the device (3) according to claim 9.

[Fig. 1]

[Fig. 2]

**[Fig. 3]**

**[Fig. 4]**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2211397

- DE 102016223943 A1